# EUROPÄISCHE PATENTSCHRIFT

(11) **EP 4 317 723 B1**
(45) Veröffentlichungstag und Bekanntmachung des Hinweises auf die Patenterteilung: **04.03.2026**
(21) Anmeldenummer: 23185786.3
(22) Anmeldetag: 17.07.2023
(51) Int. Cl.: F16C 29/04, A47B 88/487, B21D 53/12, F16C 33/38, F16C 33/66

(54) **MODULARER WÄLZKÖRPERKÄFIG**
MODULAR ROLLING BODY CAGE
CAGE MODULAIRE À CORPS ROULANTS

(30) Priorität: 04.08.2022 DE 102022119662
(43) Veröffentlichungstag der Anmeldung: 07.02.2024
(73) Patentinhaber: Accuride International GmbH, 65582 Diez/Lahn (DE)
(72) Erfinder: SATONY, Christian, 56182 Urbar (DE); NEUHAUS, Christoph, 56412 Niederelbert (DE); VERMEULEN, Sebastian, 65626 Birlenbach (DE); SCHACHNER, Desiree, 65529 Waldems (DE)
(74) Vertreter: WSL Patentanwälte Partnerschaft mbB

(56) Entgegenhaltungen:
- EP-A1- 0 111 439
- EP-A1- 1 803 949
- WO-A1-2013/141709
- DE-U- 1 849 526

## Beschreibung

### GEGENSTAND DER ERFINDUNG

Die vorliegende Erfindung betrifft einen Wälzkörperkäfig zum Positionieren einer Mehrzahl von Wälzkörpern zwischen zwei gegeneinander verfahrbar gelagerten Schienenelementen einer Teleskopschiene oder einer Linearführung. Die Erfindung umfasst auch eine Teleskopschiene sowie eine Linearführung mit gegeneinander verfahrbar gelagerten Schienenelementen und wenigstens einem erfindungsgemäßen Wälzkörperkäfig.

### HINTERGRUND DER ERFINDUNG

Teleskopschienen und Linearführungen mit zwei oder mehr gegeneinander verfahrbar gelagerten Schienenelementen werden in Möbeln, Haushaltsgeräten und vielen weiteren Anwendungen eingesetzt, beispielsweise auch im Automobil- und Flugzeugbau für die Verstellung der Passagiersitze oder zum Verfahren verschiedenster Elemente, wie Armlehnen, Konsolen etc. Da ein unmittelbares Gleiten der Schienenelemente gegeneinander mit hoher Reibung verbunden ist, werden zwischen den Schienenelementen Wälzkörper eingesetzt, welche beim Verfahren der Schienenelemente auf an den Schienenelementen vorgesehenen Laufflächen abrollen. Zum Positionieren und für eine gleichmäßige Verteilung der Wälzkörper zwischen den Laufflächen zweier gegeneinander verfahrbarer Schienenelemente werden die Wälzkörper in Wälzkörperkäfigen geführt. Der Wälzkörperkäfig gewährleistet einen definierten Abstand der Wälzkörper zueinander in Verfahrrichtung und verhindert, dass die Wälzkörper beim Verfahren der Schienenelemente unkontrolliert auseinanderlaufen oder gar zusammenlaufen und sich berühren, was dazu führen würde, dass die Wälzkörper beim Abrollen auf den Lauflächen der Schienenelemente aneinander reiben.

Bei Teleskopschienen und Linearführungen wird in der Regel ein Schienenelement als sogenanntes stationäres Schienenelement z. B. an einem Korpus festgelegt, während wenigstens ein weiteres Schienenelement gegenüber diesem stationären Schienenelement verfahrbar ist. Die gegeneinander verfahrbaren Schienenelemente von Teleskopschienen weisen meistens die gleiche oder ähnliche Länge auf. Teleskopschienen mit genau zwei gegeneinander verfahrbaren Schienenelementen werden auch als Teilauszugschienen bezeichnet, da sie aufgrund der den Auszug begrenzenden Länge des Wälzkörperkäfigs zwischen den Schienenelementen nicht bis auf das Doppelte ihrer Länge ausgezogen werden können. Ist an dem gegenüber dem stationären Schienenelement verfahrbaren Schienenelement wenigstens ein weiteres Schienenelement verfahrbar gelagert, spricht man von einer Vollauszugschiene. Bei Linearführungen ist in der Regel ein kurzes Schienenelement, das auch als Wagen oder Schlitten bezeichnet wird, verfahrbar an einem deutlich längeren stationären Schienenelement gelagert.

Je nach Anwendung dominieren bei Teleskopschienen und Linearführungen unterschiedliche Anforderungen, wie Belastbarkeit, Leichtgängigkeit, Laufruhe, Haptik beim Verfahren etc. Neben der Geometrie und dem Material der Schienenelemente selbst werden diese Anforderungen durch Auswahl, Anzahl und Positionierung der Wälzkörper wie auch durch die Art des Wälzkörperkäfigs beeinflusst. Bekannte und im Sinne der vorliegenden Erfindung einsetzbare Wälzkörper umfassen Kugeln, Rollen, Tonnen, Nadeln oder Kegel.

Damit sich die Schienenelemente einer Teleskopschiene oder einer Linearführung über die Wälzkörper aneinander abstützen und gleichzeitig so miteinander verbunden sind, dass sie sich nicht unbeabsichtigt voneinander trennen, weist ein typisches Schienenelement wenigstens zwei Laufflächen für das Abrollen der Wälzkörper auf. Es sind auch Teleskopschienen bekannt, bei denen Schienenelemente mit jeweils drei oder vier Laufflächen verfahrbar gegeneinander gelagert sind. Jeder der Laufflächen eines Schienenelements liegt eine entsprechende Lauffläche des daran verfahrbar gelagerten Schienenelements gegenüber.

Der Wälzkörperkäfig positioniert die Wälzkörper zwischen den Laufflächen der Schienenelemente. Hierfür weist der Wälzkörperkäfig Aufnahmeschenkel auf, die sich zwischen den Laufflächen der Schienenelemente erstrecken und in der Längserstreckungsrichtung, d. h. in Verfahrrichtung der Schienenelemente verteilte Durchbrechungen zum Aufnehmen und Positionieren der Wälzkörper besitzen. Die jeweils zwischen zwei Laufflächen der beiden gegeneinander verfahrbaren Schienenelemente angeordneten Aufnahmeschenkel sind üblicherweise über einen Verbindungsabschnitt miteinander verbunden. Fehlt diese Verbindung zwischen den Aufnahmeschenkeln, spricht man von Streifen-Wälzkörperkäfigen. Die Verbindung zwischen den Aufnahmeschenkeln hat jedoch einerseits fertigungstechnische Vorteile, da sie die einstückige Herstellung des Wälzkörperkäfigs erlaubt und den Einbau des Wälzkörperkäfigs mit den Wälzkörpern zwischen die Schienenelemente erleichtert. Wesentlicher ist aber, dass durch die Verbindung der Aufnahmeschenkel gewährleistet wird, dass sie sich beim Verfahren der Schienenelemente nicht an unterschiedliche Positionen in Verfahrrichtung bewegen und/oder an unterschiedlichen Positionen zum Stehen kommen, was zu einem ungünstigen Lastenabtrag, schlechten Laufeigenschaften und einer Verkürzung des Auszugswegs der Schienenelemente führen kann.

Wälzkörperkäfige werden üblicherweise aus Stahlblech oder Kunststoff hergestellt. Für die Herstellung aus Stahlblech werden aus einem flachen Blech die erforderlichen Konturen und Durchbrechungen ausgestanzt oder ausgeschnitten und anschließend wird das Blech durch verschiedene Biegevorgänge in die gewünschte räumliche Form des Wälzkörperkäfigs gebracht. Wälzkörperkäfige aus Kunststoff werden üblicherweise einstückig im Spritzgussverfahren hergestellt. Sie zeichnen sich gegenüber solchen aus Stahlblech durch eine bessere Laufruhe der damit ausgestatteten Teleskopschienen und Linearführungen aus und werden daher häufig in Anwendungen eingesetzt, wo Verfahrgeräusche möglichst vermieden werden sollen und eine angenehme Haptik erwünscht ist, beispielsweise im Automobilbau für das Verfahren von Konsolen oder anderen passagiernahen Elementen.

Unterschiedliche Anforderungen an die Verfahrwege und Eigenschaften der zu verbauenden Teleskopschienen und Linearführungen, wie Belastbarkeit, Leichtgängigkeit, Laufruhe, Haptik etc., erfordern nicht nur unterschiedliche Längen der Schienenelemente, sondern auch eine entsprechend angepasste Anzahl und Positionierung der Wälzkörper zwischen den Schienenelementen, wofür wiederum unterschiedliche Wälzkörperkäfige in verschiedenen Längen und ggf. auch unterschiedlich positionierten Aufnahmen für die Wälzkörper benötigt werden.

Für die Herstellung von Wälzkörperkäfigen aus Kunststoff im Spritzgussverfahren ist für jede Ausführungsform eines Wälzkörperkäfigs in Bezug auf dessen Länge und/oder Positionierung der Aufnahmen für die Wälzkörper ein individuelles Spritzgusswerkzeug (Spritzgussform) erforderlich. Da bereits die Kosten für ein solches Spritzgusswerkzeugs hoch sind, kann die Herstellung bzw. das Vorhalten einer Vielzahl von Wälzkörperkäfigen unterschiedlicher Längen unwirtschaftlich sein, insbesondere bei der Herstellung von Teleskopschienen und Linearführungen in Kleinserien.

Eine Lösung zumindest für die Bereitstellung von Wälzkörperkäfigen unterschiedlicher Längen könnte darin bestehen, sehr lange Wälzkörperkäfige mit einem hierfür ausgelegten Spritzgusswerkzeug herzustellen und diese anschließend durch Abschneiden auf die für die jeweilige Anforderung benötigte Länge zu kürzen. Dabei werden jedoch wertvolle Ressourcen in der Form des abgeschnittenen und nicht mehr benötigten Materials verschwendet. Darüber hinaus muss das Verschnittmaterial anschließend aufwendig entsorgt oder zumindest rezykliert werden, soweit dies überhaupt möglich ist. Darüber hinaus wäre bei dieser Lösung die Positionierung der Aufnahmen für die Wälzkörper festgelegt und nicht variierbar.

WO 2013/141709 beschreibt einen modular aufgebauten Kugelkäfig gemäß dem Oberbegriff des Anspruchs 1, der aus einzelnen Streifenmodulen mit Durchbrechungen zum Aufnehmen von Kugeln, Brückenteilen sowie Endmodulen zusammengesetzt ist. Die Streifenmodule lassen sich in Reihe miteinander verbinden. Die Brückenteile besitzen einen Mittenabschnitt sowie an gegenüberliegenden Enden des Mittenabschnitts zwei Endteile, welche jeweils mit Streifenmodulen verbindbar sind und über die sie zwischen zwei Streifenmodule eingesetzt werden, um über den Mittenabschnitt eine Verbindung zwischen gegenüberliegenden Streifen von einer zur anderen Kugellaufbahn einer Teleskopschiene herzustellen. Die Endmodule sind an den äußersten Enden des Kugelkäfigs an endständigen Streifenmodulen festgelegt.

EP 0 111 439 beschreibt ein langgestrecktes Konstruktionselement mit variierbarer Länge, bestehend aus einem inneren und einem äußeren Rohr, die gegeneinander gelagert und verschiebbar sind. Zur Lagerung und Führung der Rohre gegeneinander werden Rollenlager vorgeschlagen, welche in einem Halter angeordnet sind. Der Halter umfasst zwei Streifen mit Durchbrechungen für die Aufnahme von Rollen und mit einem Zwischenteil, das die beiden Streifen miteinander verbindet. In einer Ausführungsform sind an den jeweiligen Enden der Streifen Schwalbenschwanz-Verbindungsstrukturen ausgebildet, die es ermöglichen, mehrere Halter in einer Reihe miteinander zu verbinden.

### AUFGABE DER ERFINDUNG

Die Aufgabe der vorliegenden Erfindung bestand daher darin, die Bereitstellung von Wälzkörperkäfigen unterschiedlicher Längen und gegebenenfalls unterschiedlicher Positionierung der Aufnahmen für die Wälzkörper möglichst kostengünstig und ressourcenschonend zu verwirklichen.

### BESCHREIBUNG DER ERFINDUNG

Gelöst wird diese Aufgabe erfindungsgemäß durch einen Wälzkörperkäfig zum Positionieren einer Mehrzahl von Wälzkörpern zwischen zwei gegeneinander verfahrbar gelagerten Schienenelementen einer Teleskopschiene oder einer Linearführung,
wobei der Wälzkörperkäfig aus zwei oder mehr Modulelementen zusammengesetzt oder zusammensetzbar ist, welche ein Basismodul und ein oder mehrere Verlängerungsmodule umfassen,
wobei jedes Modulelement genau zwei Aufnahmeschenkel mit jeweils einer oder mehreren Durchbrechungen zum Aufnehmen von Wälzkörpern und wenigstens einen die beiden Aufnahmeschenkel verbindenden Verbindungsabschnitt aufweist, wobei die Aufnahmeschenkel in einem Winkel von etwa 80 bis 100° zu dem wenigstens einen Verbindungsabschnitt unter Ausbildung eines im Wesentlichen C-förmigen Querschnitts abgewinkelt angeordnet sind, wobei das Basismodul und das eine oder die mehreren Verlängerungsmodule in Reihe in der Längserstreckungsrichtung des Wälzkörperkäfigs fest oder lösbar miteinander verbunden oder verbindbar sind.

Wenn im Zusammenhang mit dem erfindungsgemäßen Wälzkörperkäfig von einer Längserstreckungsrichtung des Wälzkörperkäfigs oder der Modulelemente die Rede ist, bezeichnet dies die Richtung parallel zu den Aufnahmeschenkeln. Die Längserstreckungsrichtung des Wälzkörperkäfigs bzw. der Modulelemente entspricht im Wesentlichen der Verfahrrichtung der zwei gegeneinander verfahrbar gelagerten Schienenelemente einer Teleskopschiene oder einer Linearführung, wenn der Wälzkörperkäfig zwischen diesen zum Positionieren der Wälzkörper angeordnet ist.

Erfindungsgemäß weist jedes Modulelement zwei Aufnahmeschenkel mit jeweils einer oder mehreren Durchbrechungen zum Aufnehmen von Wälzkörpern auf sowie einen die beiden Aufnahmeschenkel verbindenden Verbindungsabschnitt. Das Basismodul weist vorzugsweise in jedem Aufnahmeschenkel mehrere Durchbrechungen zum Aufnehmen von Wälzkörpern auf. In bevorzugten Ausführungsformen der Erfindung weist jeder Aufnahmeschenkel des Basismoduls zwei, drei, vier, fünf, sechs, sieben, acht, neun, zehn oder mehr Durchbrechungen zum Aufnehmen von Wälzkörpern auf. Ein oder mehrere Verlängerungsmodule werden in Reihe an das Basismodul angefügt und mit diesem fest oder lösbar verbunden, um einen Wälzkörperkäfig mit der gewünschten bzw. benötigten Länge und Anzahl von Durchbrechungen zum Aufnehmen von Wälzkörpern zu erhalten. In bevorzugten Ausführungsformen der Erfindung weisen Verlängerungsmodule in jedem Aufnahmeschenkel eine, zwei, drei, vier, fünf, sechs, sieben, acht, neun, zehn oder mehr Durchbrechungen zum Aufnehmen von Wälzkörpern auf.

Üblicherweise weist ein Wälzkörperkäfig für eine Teleskopschiene oder Linearführung wenigstens vier bis zehn Wälzkörper je Aufnahmeschenkel auf, da ansonsten eine stabile Lagerung und gute Laufeigenschaften beim Verfahren der Schienenelemente gegeneinander nicht gewährleistet sind. Je länger die gegeneinander zu verfahrenden Schienenelemente sind, desto länger sollte der Wälzkörperkäfig und desto größer sollte die Anzahl der darin aufgenommenen Wälzkörper sein.

In einer bevorzugten Ausführungsform der Erfindung ist der Verbindungsabschnitt eines Modulelements als ein flacher Streifen oder ein flaches Band ausgebildet, an dessen gegenüberliegenden seitlichen Rändern bzw. Kanten, welche parallel zur Längserstreckungsrichtung verlaufen, sich jeweils ein ebenfalls als Streifen oder Band ausgebildeter Aufnahmeschenkel mit den Durchbrechungen anschließt. Die Aufnahmeschenkel sind gegenüber dem Verbindungsabschnitt abgewinkelt, wobei der Winkel der Aufnahmeschenkel gegenüber dem Verbindungsabschnitt vom Profil der gegeneinander zu verfahrenden Schienenelemente abhängt. Erfindungsgemäß sind die Aufnahmeschenkel in einem Winkel von etwa 80 bis 100° gegenüber dem Verbindungsabschnitt abgewinkelt, vorzugsweise in einem Winkel von etwa 90°, d. h. im Wesentlichen senkrecht. In Blickrichtung der Längserstreckungsrichtung hat ein solcher Wälzkörperkäfig bzw. ein solches Modulelement mit zwei Aufnahmeschenkeln daher einen im Wesentlichen C-förmigen Querschnitt. Der Verbindungsabschnitt muss sich jedoch nicht notwendigerweise durchgängig über die gesamte Länge der Aufnahmeschenkel erstrecken. Der Verbindungsabschnitt kann erfindungsgemäß auch durch einen oder mehrere schmale Stege zwischen den Aufnahmeschenkeln verwirklicht sein. Mehrere einzelne schmale Stege zwischen zwei Aufnahmeschenkeln eines Modulelements sind daher im Sinne der Erfindung als ein Verbindungsabschnitt zu verstehen.

Wenn hierin davon die Rede ist, dass der Wälzkörperkäfig bzw. jedes Modulelement zwei Aufnahmeschenkel sowie einen die Aufnahmeschenkel verbindenden Verbindungsabschnitt aufweist, so schließt dies nicht weitere Aufnahmeschenkel und Verbindungsabschnitte am Wälzkörperkäfig bzw. an den Modulelementen aus. Von der Erfindung umfasst sind auch Ausgestaltungen des Wälzkörperkäfigs und somit auch der einzelnen Modulelemente mit jeweils drei oder vier Aufnahmeschenkeln mit Durchbrechungen für die Aufnahme von Wälzkörpern, die jeweils durch Verbindungsabschnitte miteinander verbunden sind. Derartige Wälzkörperkäfige eignen sich beispielsweise für Teleskopschienen, bei denen die Schienenelemente jeweils drei oder vier Laufflächen für die Wälzkörper aufweisen.

Wenn hierin davon die Rede ist, dass Modulelemente, nämlich das Basismodul und ein oder mehrere Verlängerungsmodule "in Reihe" miteinander verbunden sind, dann beschreibt dies, dass zunächst das Basismodul an einem seiner in Längserstreckungsrichtung liegenden Endabschnitte mit einem der Endabschnitte eines Verlängerungsmoduls fest oder lösbar verbunden ist. An wenigstens diesen Endabschnitten weisen das Basismodul und das Verlängerungsmodul aufeinander abgestimmte Befestigungsmittel auf, d. h. Verbindungsstrukturen, die ein festes oder lösbares Verbinden der beiden Modulelemente erlauben. Für ein Verbinden des Basismoduls mit mehreren Verlängerungsmodulen in Reihe, weist jedes Verlängerungsmodul, welches ausgehend vom Basismodul in Längserstreckungsrichtung mit weiteren Modulelementen verbunden oder verbindbar ist, an jedem seiner beiden Endabschnitte Befestigungsmittel für ein Verbinden mit weiteren Modulelementen auf, nämlich einerseits für ein Verbinden mit dem Basismodul oder einem in Richtung des Basismoduls vorausgehenden Verlängerungsmodul sowie andererseits für ein Verbinden mit einem in Reihe folgenden Verlängerungsmodul.

Es versteht sich, dass das Basismodul und das letzte in Reihe angeordnete (endständige) Verlängerungsmodul des Wälzkörperkäfigs, welches den Abschluss in der Reihe der verbundenen Modulelemente bildet, an den jeweils außen liegenden Endabschnitten, welche nicht mit weiteren Modulelementen verbunden werden, keine Befestigungsmittel für weitere Verlängerungsmodule mehr erfordern. Das Vorhandensein solcher Befestigungsmittel an den jeweiligen Enden eines Wälzkörperkäfigs ist jedoch in der Regel nicht mit Nachteilen für den Wälzkörperkäfig oder die Funktion und Laufeigenschaften der Teleskopschiene oder Linearführung verbunden. Die Erfindung umfasst daher Ausführungsformen, bei denen das Basismodul und/oder das endständige Verlängerungsmodul an beiden Endabschnitten der Modulelemente jeweils Befestigungsmittel für ein festes oder lösbares Verbinden mit weiteren Modulelementen aufweisen. Als Basismodul und als endständiges Verlängerungsmodul können daher auch Modulelemente eingesetzt werden, die wie die dazwischen angeordneten Verlängerungsmodule ausgestaltet sind und an beiden Endabschnitten jeweils Befestigungsmittel aufweisen, welche dann ohne Nachteil im zusammengefügten Wälzkörperkäfig nicht mit weiteren Modulelementen verbunden sind bzw. werden. Jedes Modulelement mit Befestigungsmitteln an beiden Endabschnitten kann sowohl als Basismodul als auch als Verlängerungsmodul eingesetzt werden, sodass von einem Modulelement mit einer bestimmten Anzahl an Durchbrechungen nur eine Ausführungsform hergestellt werden muss, wodurch wiederum Werkzeug- und Herstellungskosten für die Modulelemente eingespart und Modulelemente flexibler eingesetzt werden können. Daher kann erfindungsgemäß bereits mit einer einzigen Ausführungsform eines Modulelements, welche als Basismodul und zur Verlängerung als Verlängerungsmodul einsetzbar ist, eine Vielzahl unterschiedlich langer Wälzkörperkäfige mit einem ganzzahligen Vielfachen der Länge bzw. Anzahl an Durchbrechungen des einzelnen Modulelements zusammengefügt werden.

In einer Ausführungsform der Erfindung sind die in den Aufnahmeschenkeln des zusammengebauten Wälzkörperkäfigs in der Längserstreckungsrichtung verteilten Durchbrechungen zum Aufnehmen von Wälzkörpern in gleichen Abständen zueinander angeordnet. Entsprechend sind in dieser Ausführungsform die Durchbrechungen in den einzelnen Modulelementen, aus denen der Wälzkörperkäfig zusammengesetzt ist, in gleichen Abständen zueinander angeordnet. Dabei sind auch die den jeweiligen Endabschnitten eines Modulelements am nächsten liegenden Durchbrechungen in einem solchen Abstand zu den Endabschnitten angeordnet, dass auch der Abstand der Durchbrechungen über die Verbindung zweier Modulelemente hinweg gleich ist. In einer alternativen Ausführungsform können die Durchbrechungen in den Aufnahmeschenkeln des zusammengebauten Wälzkörperkäfigs in der Längserstreckungsrichtung jedoch auch in unterschiedlichen Abständen zueinander angeordnet sein, wenn es für die jeweilige Anwendung der Teleskopschiene oder Linearführung erforderlich oder vorteilhaft ist. Beispielsweise können die Abstände der Durchbrechungen entlang der Aufnahmeschenkel in Längserstreckungsrichtung des zusammengebauten Wälzkörperkäfigs vom Basismodul zum letzten Verlängerungsmodul zu- oder abnehmen, um in einer bestimmten Verfahrrichtung der Schienenelemente in dem Wälzkörperkäfig eine höhere Anzahl bzw. dichtere Anordnung an Wälzkörpern vorzusehen als in der entgegengesetzten Verfahrrichtung, was mit Vorteilen hinsichtlich des Lastenabtrags bei bestimmten Verfahrpositionen oder -vorgängen verbunden sein kann. In einer alternativen Ausführungsform ist an den beiden in Längserstreckungsrichtung liegenden Endabschnitten des Wälzkörperkäfigs eine höhere Anzahl bzw. dichtere Anordnung an Durchbrechungen und somit an Wälzkörpern vorgesehen als zu dessen Mitte hin. Durch eine solche Verteilung der Durchbrechungen und damit der Anordnung der Wälzkörper im Wälzkörperkäfig kann in bestimmten Anwendungen und bei mechanischen Belastungen über längere Zeiträume ein ruhigeres Laufverhalten, reduziertes Ruckeln und eine größere Stetigkeit beim Verfahren der Schienenelemente erzielt werden. Eine höhere Anzahl bzw. dichtere Anordnung an Wälzkörpern an den Endabschnitten des Wälzkörperkäfigs hat auch Vorteile hinsichtlich des Lastenabtrags, da dort die auf den Wälzkörperkäfig wirkenden Hebelkräfte am größten sind, insbesondere bei ausgezogenen Schienenelementen einer Teleskopschiene. Die Abstände der Durchbrechungen in den einzelnen Modulelementen zur Herstellung solcher Ausführungsformen des erfindungsgemäßen Wälzkörperkäfigs mit unterschiedlich beabstandeten Durchbrechungen in den Aufnahmeschenkeln sind entsprechend zu wählen. Hierfür können Modulelemente bereitgestellt werden, bei denen die Abstände der Durchbrechungen innerhalb des Modulelements variieren. Alternativ können verschiedene Ausführungsformen von Modulelementen kombiniert werden, die innerhalb eines Modulelements jeweils gleiche aber gegenüber anderen Modulelementen unterschiedliche Abstände der Durchbrechungen aufweisen.

Die Verbindung zwischen den Modulelementen durch Befestigungsmittel an ihren Endabschnitten kann eine formschlüssige, eine kraftschlüssige und/oder eine stoffschlüssige Verbindung sein. In einer bevorzugten Ausführungsform der Erfindung erfolgt die Verbindung zwischen den Endabschnitten zweier Modulelemente durch eine Kombination aus einer form- und kraftschlüssigen Verbindung. Geeignet ist unter anderem eine formschlüssige Verbindung mit einer Verrastung im verbundenen Zustand, um ein unbeabsichtigtes Lösen der Verbindung im Betrieb zu verhindern. Eine solche Rastverbindung braucht auch nicht ohne Weiteres wieder lösbar zu sein, da der Wälzkörperkäfig im Regelfall nur einmal in der gewünschten Länge durch Verbinden der Modulelemente zusammengefügt wird und dann für die Lebensdauer der Teleskopschiene oder Linearführung zwischen zwei gegeneinander verfahrbar gelagerten Schienenelementen verbleibt.

Die Definition, dass Modulelemente miteinander "verbindbar" sind, beschreibt lediglich, dass die Modulelemente des erfindungsgemäßen Wälzkörperkäfigs auch im nicht miteinander verbundenen Zustand, d. h. getrennt voneinander vorliegen können, ohne vom Gedanken der vorliegenden Erfindung abzuweichen, da die Modulelemente auch im nicht miteinander verbundenen Zustand zu dem Zweck angeboten und gehandelt werden können, dass der Verwender diese je nach gewünschter Länge des Wälzkörperkäfigs auswählt und miteinander verbindet.

Die einzelnen Modulelemente sind so ausgebildet, dass sie einen zusammenhängenden Wälzkörperkäfig bilden, wenn sie in Reihe miteinander verbunden sind. Die zwei Aufnahmeschenkel eines jeden Modulelements sind im verbundenen Zustand dabei an den Aufnahmeschenkeln des nächsten verbundenen Modulelements so ausgerichtet, dass durch die Verbindung von zwei oder mehr Modulelementen ein Wälzkörperkäfig gebildet wird mit zwei durch das Aneinanderfügen gebildeten Aufnahmeschenkeln, deren Länge der Summe der Aufnahmeschenkel der einzelnen Modulelemente entspricht.

Erfindungsgemäß sind die Befestigungsmittel, durch welche zwei Modulelemente an ihren einander zugewandten Endabschnitten miteinander verbindbar oder verbunden sind, für eine solche Verbindung aufeinander abgestimmt und ausgelegt. Dem Fachmann sind grundsätzlich verschiedenste form-, kraft- und/oder stoffschlüssige Verbindungtechniken bekannt.

In einer bevorzugten Ausführungsform der Erfindung sind die Befestigungsmittel an den Endabschnitten der Aufnahmeschenkel der Modulelemente angeordnet. Durch die Verbindung der Modulelemente über deren Aufnahmeschenkel wird eine hohe strukturelle Stabilität des aus den Modulelementen zusammengefügten Wälzkörperkäfigs erzielt.

Alternativ oder ergänzend zu Befestigungsmitteln bzw. Verbindungsstrukturen an den Endabschnitten der Aufnahmeschenkel kann eine Verbindung zweier Modulelemente über Befestigungsmittel an den in Längserstreckungsrichtung der Modulelemente liegenden Endabschnitten der Verbindungsabschnitte zwischen den Aufnahmeschenkeln erfolgen. In einer Ausführungsform erfolgt die Verbindung zweier Modulelementen über ihre Verbindungsabschnitte mittels einer Blattstoßverbindung, indem sich ein laschenförmiger Abschnitt (Blatt) an einem der Verbindungsabschnitte über das Ende des Modulelements hinaus bis unter oder über den Verbindungsabschnitt des zu verbindenden weiteren Modulelements erstreckt und die überlappenden Abschnitte durch Verkleben oder Verschweißen, vorzugsweise durch Ultraschallschweißen oder Laserschweißen, miteinander verbunden werden.

Grundsätzlich ist es erfindungsgemäß vorteilhaft und bevorzugt, dass die Befestigungsmittel an jedem Modulelement zu denjenigen jedes anderen Modulelements passen, d. h. mit diesen verbindbar sind, sodass jedes Verlängerungsmodul sowohl mit dem Basismodul als auch mit jedem anderen Verlängerungsmodul verbindbar ist. Zwei für ein festes oder lösbares Verbinden aufeinander abgestimmte Befestigungsmittel haben in der Regel nicht die gleiche Struktur, sondern müssen im Wesentlichen komplementär zueinander sein, wenn sie form- und/oder kraftschlüssig miteinander in Eingriff treten sollen. Erfindungsgemäß sind daher "erste" und "zweite" Befestigungsmittel vorgesehen, welche unterschiedliche Struktur aufweisen, die aber zueinander passen und miteinander verbindbar sind. Vorzugsweise sind "erste" und "zweite" Befestigungsmittel im Wesentlichen komplementär in dem Sinne zueinander ausgebildet, dass sie miteinander in Eingriff bzw. verbindbar sind.

In der erfindungsgemäß bevorzugten Ausführungsform der Erfindung, bei der die Verbindung der Modulelemente über Befestigungsmittel an den Endabschnitten der zwei Aufnahmeschenkel der Modulelemente erfolgt, sind somit auf beiden Seiten bzw. Enden eines Modulelements jeweils zwei Befestigungsmittel vorgesehen, nämlich eines an jedem Endabschnitt jedes Aufnahmeschenkels. Es versteht sich, wie oben ausgeführt, dass Basismodule und/oder endständige Verlängerungsmodule je nach Ausführungsform die Befestigungsmittel entweder nur auf einer Seite bzw. an einem Ende aufweisen oder ebenfalls auf beiden Seiten bzw. Enden.

In einer Ausführungsform der Erfindung, bei der die Befestigungsmittel an den Endabschnitten der zwei Aufnahmeschenkel der Modulelemente vorgesehen sind, sind an den beiden zum gleichen Ende des jeweiligen Modulelements ausgerichteten Endabschnitten der Aufnahmeschenkel gleiche "erste" Befestigungsmittel vorgesehen, und an den beiden zum gegenüberliegenden Ende des Modulelements ausgerichteten Endabschnitten der Aufnahmeschenkel sind ebenfalls gleiche, aber für ein Verbinden mit den "ersten" Befestigungsmitteln ausgelegte und ausgebildete "zweite" Befestigungsmittel vorgesehen, welche mit den "ersten" Befestigungsmitteln bzw. Verbindungsstrukturen verbindbar sind. Die Erfinder bezeichnen diese Ausführungsform als "spiegelsymmetrische" Anordnung der ersten und zweiten Befestigungsmittel.

Bei dieser Ausführungsform kann jedes Modulelement mit jedem anderen Modulelement, sei es ein Modulelement gleicher Ausführung mit gleicher Länge bzw. Anzahl an Durchbrechungen oder ein Modulelement anderer Ausführung mit anderer Länge bzw. Anzahl an Durchbrechungen, verbunden werden. Modulelemente dieser Ausführungsform sind nur in gleicher Ausrichtung bezüglich der Lage der Befestigungselemente mit weiteren Modulelementen in Reihe verbindbar. Zum Verbinden zweier Modulelemente dieser Ausführungsform sind die Modulelemente so auszurichten, dass die beiden "ersten" Befestigungsmittel an den Endabschnitten der Aufnahmeschenkel am gleichen Ende eines Modulelements und die beiden "zweiten" Befestigungsmitteln an den Endabschnitten der Aufnahmeschenkel am gleichen Ende des zu verbindenden Modulelements zueinander weisen.

In einer weiteren bevorzugten Ausführungsform der Erfindung, bei der die Befestigungsmittel an den Endabschnitten der zwei Aufnahmeschenkel der Modulelemente vorgesehen sind, sind an den beiden zum gleichen Ende des jeweiligen Modulelements ausgerichteten Endabschnitten der Aufnahmeschenkel unterschiedliche Befestigungsmittel vorgesehen, nämlich ein "erstes" Befestigungsmittel am Endabschnitt eines ersten Aufnahmeschenkels und ein "zweites" Befestigungsmittel am Endabschnitt des zweiten Aufnahmeschenkels. An den beiden zum gegenüberliegenden Ende des Modulelements ausgerichteten Endabschnitten der Aufnahmeschenkel sind über Kreuz ebenfalls unterschiedliche Befestigungsmittel vorgesehen, nämlich ein "zweites" Befestigungsmittel am gegenüberliegenden Endabschnitt des ersten Aufnahmeschenkels und ein "erstes" Befestigungsmittel am gegenüberliegenden Endabschnitt des zweiten Aufnahmeschenkels. Die Erfinder bezeichnen diese Ausführungsform als "kreuzweise" oder "rotationssymmetrische" Anordnung der ersten und zweiten Befestigungsmittel.

Bei dieser Ausführungsform kann ebenfalls jedes Modulelement mit jedem anderen Modulelement verbunden werden. Jedoch hat die "rotationssymmetrische" Anordnung dieser Ausführungsform gegenüber der "spiegelsymmetrischen" Anordnung den weiteren Vorteil, dass jedes Modulelement unabhängig von seiner Ausrichtung in Längserstreckungsrichtung mit jedem weiteren Modulelement ebenfalls unabhängig von dessen Ausrichtung in Längserstreckungsrichtung in Reihe verbindbar ist. Dies hat unter anderem Vorteile beim manuellen wie auch maschinellen Zusammenbau des Wälzkörperkäfigs.

In einer erfindungsgemäß bevorzugten Ausführungsform sind die miteinander verbindbaren oder verbundenen Befestigungsmittel, wie die "ersten" und "zweiten" Befestigungsmittel, als Nut- und Feder-Verbindungen oder als Zapfen- und Zapfenloch-Verbindungen ausgebildet. Die Begriffe Nut- und Feder-Verbindung und Zapfen- und Zapfenloch-Verbindung sind im Sinne der Erfindung weit zu verstehen und umfassen unterschiedliche Nut- und Feder-Geometrien bzw. Zapfen- und Zapfenloch-Geometrien in dem Sinne, dass Nut und Feder bzw. Zapfen und Zapfenloch Positiv- und Negativ-Formen für eine Verbindung, vorzugsweise eine formschlüssige Verbindung, gegen eine Trennung der Modulelemente in Längserstreckungsrichtung des Wälzkörperkäfigs darstellen.

In einer bevorzugten Ausführungsform einer erfindungsgemäßen Nut- und Feder-Verbindung ist als ein "erstes" Befestigungsmittel am Endabschnitt des Aufnahmeschenkels eines ersten Modulelements eine sich senkrecht zur Längserstreckungsrichtung des Modulelements und senkrecht zum Verbindungsabschnitt ersteckende Nut ausgebildet, welche von oben, d. h. von der dem Verbindungsabschnitt abgewandten Seite des Aufnahmeschenkels offen für das Einführen einer als ein "zweites" Befestigungsmittel am Endabschnitt des Aufnahmeschenkels eines zweiten Modulelements angeordneten Feder als Positiv-Form zu der Nut ausgebildet ist. Für ein Verbinden der Befestigungsmittel wird die Feder an dem zweiten Modulelement von oben in die Nut des ersten Modulelements in Richtung des Verbindungsabschnitts eingeführt.

Bei einer erfindungsgemäß bevorzugten Nut- und Feder-Verbindung der vorgenannten Art ist die Feder als Schwalbenschanz-Feder und die Nut als Schwalbenschwanz-Nut oder Schwalbenschwanz-Fuge ausgebildet.

In einer weiteren bevorzugten erfindungsgemäßen Ausführungsform der Nut- und Feder-Verbindung der vorgenannten Art sind die Nut und die Feder für einen verrastenden Eingriff beim Einführen der Feder in die Nut ausgebildet, um die Verbindung gegen ein unbeabsichtigtes Lösen zu sichern. In einer Ausführungsform ist hierfür in der Nut wenigstens eine Rastausnehmung, ein Hinterschnitt, eine Rastnase oder eine Zahnung vorgesehen und an der Feder eine für eine Verrastung damit ausgebildete Gegenfläche.

In einer weiteren erfindungsgemäßen Ausführungsform sind die miteinander verbindbaren oder verbundenen Befestigungsmittel als Zapfen- und Zapfenloch-Verbindung ausgebildet, vorzugsweise an den Endabschnitten der Aufnahmeschenkel der Modulelemente. Der Zapfen erstreckt sich zweckmäßigerweise am Endabschnitt des Aufnahmeschenkels eines Modulelements in Längserstreckungsrichtung und das zu verbindende Modulelement weist am Endabschnitt des Aufnahmeschenkels ein entsprechendes Zapfenloch für die Aufnahme des Zapfens auf. Anders als bei der zuvor beschriebenen Nut- und Feder-Verbindung werden die Modulelemente zum Verbinden der Zapfen- und Zapfenloch-Verbindung in Längserstreckungsrichtung zueinandergeführt und der Zapfen in das Zapfenloch eingeführt. Zweckmäßigerweise sind der Zapfen und das Zapfenloch für einen verrastenden Eingriff beim Einführen des Zapfens in das Zapfenloch ausgebildet, um die Verbindung gegen ein unbeabsichtigtes Lösen zu sichem. In einer Ausführungsform ist hierfür im Zapfenloch wenigstens eine Rastausnehmung, ein Hinterschnitt, eine Rastnase oder eine Zahnung vorgesehen und der Zapfen weist eine für eine Verrastung damit ausgebildete Gegenfläche auf.

Bei dem erfindungsgemäßen Wälzkörperkäfig erstrecken sich die Aufnahmeschenkel mit den Durchbrechungen zum Aufnehmen der Wälzkörper zwischen den Laufflächen der Schienenelemente und sind im Wesentlichen als Streifen oder Bänder ausgebildet. Die Wälzkörper in den Durchbrechungen treten zu beiden Seiten eines Aufnahmeschenkels hervor und sind in Berührung mit den einander gegenüber liegenden Laufflächen der Schienenelemente. Es versteht sich, dass die Ausdehnung der Befestigungsmittel an den Endabschnitten der Aufnahmeschenkel in Richtung der Laufflächen der Schienenelemente nicht größer sein darf als die Erstreckung der Wälzkörper bis zu den Laufflächen, damit die Befestigungsmittel nicht an den Laufflächen reiben und die Laufeigenschaften beeinträchtigen.

In einer bevorzugten Ausführungsform der Erfindung ist der Wälzkörperkäfig ein Kugelkäfig für die Aufnahme von Kugeln als Wälzkörper.

In einer weiteren bevorzugten Ausführungsform der Erfindung ist jede der Durchbrechungen in den Aufnahmeschenkeln des Wälzkörperkäfigs und somit in den Aufnahmeschenkeln der einzelnen Modulelemente zum Aufnehmen von jeweils genau einem Wälzkörper, vorzugsweise von genau einer Kugel ausgebildet. Dies gewährleistet beste Laufeigenschaften einer mit dem erfindungsgemäßen Wälzkörperkäfig ausgerüsteten Teleskopschiene oder Linearführung. Die Erfindung umfasst jedoch auch Ausführungsformen, bei denen einzelne, mehrere oder alle Durchbrechungen mehr als nur einen Wälzkörper aufnehmen können, beispielsweise zwei, drei oder vier Wälzkörper. Dabei können einzelne Wälzkörper innerhalb einer Durchbrechung durch Abstandshalter, z. B. durch sich vom Rand der Durchbrechungen erstreckende Stege oder Laschen, in einem Abstand zueinander gehalten werden, um eine Berührung der Wälzkörper beim Verfahren der Schienenelemente und damit eine unerwünschte Reibung zwischen den Wälzkörpern zu verhindern.

In der Ebene der Aufnahmeschenkel sind die Durchbrechungen zur Aufnahme der Wälzkörper zweckmäßigerweise so dimensioniert, dass der Wälzkörper vollständig in die Durchbrechung eingesetzt werden kann. Bei Kugelkäfigen sollen die Kugeln für ein gutes Laufverhalten üblicherweise mit ihrem Mittelpunkt etwa in der Ebene der Aufnahmeschenkel positioniert sein. Die Begrenzungen bzw. Ränder der Durchbrechungen können dabei so gewählt sein, dass zwischen diesen und dem Wälzkörper wenigstens ein geringer Abstand verbleibt, damit der Wälzkörper mit etwas Spiel in der jeweiligen Durchbrechung sitzt und es nicht zum Beispiel aufgrund von gewissen Fertigungstoleranzen zu einem Festklemmen des Wälzkörpers in der Durchbrechung kommt. Allerdings kann es nachteilig sein, wenn der Wälzkörper, wie beispielsweise eine Kugel, vollständig durch die Durchbrechung hindurchtreten kann, da sich dann der Wälzkörperkäfig senkrecht zur Verfahrrichtung zwischen den Laufflächen der Schienenelemente hin und her bewegen und beim Verfahren an den Schienenelementen schleifen oder sich im ungünstigsten Fall auch verkanten kann.

In einer weiteren bevorzugten Ausführungsform der Erfindung sind daher an den Durchbrechungen in den Aufnahmeschenkeln zum Aufnehmen der Wälzkörper Durchtrittsbegrenzer vorgesehen, welche ein vollständiges Hindurchtreten eines Wälzkörpers durch die Durchbrechung verhindern. In einer Ausführungsform sind die Durchtrittsbegrenzer als sich vom Rand der jeweiligen Durchbrechung und aus der Ebene des jeweiligen Aufnahmeschenkels heraus abgewinkelt erstreckende Anlageflächen in der Form von Laschen oder Vorsprüngen ausgebildet, welche so angeordnet sind, dass sie ein vollständiges Hindurchtreten des in der jeweiligen Durchbrechung aufgenommenen Wälzkörpers verhindern und den Wälzkörper vorzugsweise mittig in der jeweiligen Durchbrechung halten, so dass der Wälzkörper etwa jeweils gleich weit zu beiden Seiten des Aufnahmeschenkels aus der Durchbrechung herausragt.

In einer weiteren Ausführungsform sind die Durchtrittsbegrenzer dadurch gebildet, dass sich der Durchmesser am inneren Umfangsrand der Durchbrechung in einer Richtung senkrecht zur Ebene des Aufnahmeschenkels derart verjüngt, dass der Wälzkörper zwar in die Durchbrechung eingesetzt, aber nicht hindurchtreten kann. In einer bevorzugten Ausführungsform einer zum Beispiel kreisrunden Durchbrechung zum Aufnehmen einer Kugel als Wälzkörper verjüngt sich der innere Umfangsrand der Durchbrechung kegel- oder kalottenförmig, wobei die Verjüngung über den vollen Umfang der Durchbrechjung oder aber auch nur abschnittsweise vorliegen muss. Die Kugel wird in die Durchbrechung eingesetzt, kann aber nicht hindurchtreten, da sie an dem sich kegel- oder kalottenförmig verjüngenden inneren Umfangsrand der Durchbrechung in Anlage kommt.

Zweckmäßigerweise sind die Durchtrittsbegrenzer an den Durchbrechungen der zwei einander gegenüberliegenden Aufnahmeschenkel eines Wälzkörperkäfigs derart angeordnet und ausgebildet, dass sie ein Hindurchtreten der Wälzkörper in entgegengesetzte Richtungen, d. h. entweder zum jeweils gegenüberliegenden Aufnahmeschenkel hin oder von diesem weg verhindern. Wenn der Wälzkörperkäfig mit den Wälzkörpern in eine Teleskopschiene oder Linearführung eingebaut ist, wird so eine Abstützung des Wälzkörperkäfigs an den Wälzkörpern in entgegengesetzte Richtungen gewährleistet, und die Teleskopschiene oder Linearführung kann in jeder Ausrichtung verbaut werden, ohne dass die Gefahr des Hindurchtretens der Wälzkörper durch die Durchbrechungen und damit verbunden eine Verschiebung des Wälzkörperkäfigs hin zu den Laufflächen der Schienenelemente besteht.

In einer bevorzugten Ausführungsform der Erfindung sind die Durchtrittsbegrenzer an den Durchbrechungen der zwei einander gegenüberliegenden Aufnahmeschenkel eines Wälzkörperkäfigs derart angeordnet und ausgebildet, dass sie ein Hindurchtreten der Wälzkörper zum jeweils gegenüberliegenden Aufnahmeschenkel, d. h. von außen zur Mitte des Wälzkörperkäfigs hin verhindern. Dies hat prozesstechnische Vorteile beim späteren Zusammenbau der Teleskopschienen oder Linearführungen, insbesondere beim automatisierten Einsetzen der Wälzkörper in den Wälzkörperkäfig von außen.

In einer weiteren Ausführungsform der Erfindung sind am inneren Umfangsrand der Durchbrechungen in den Aufnahmeschenkeln zum Aufnehmen der Wälzkörper Ausnehmungen bzw.

Taschen vorgesehen, welche für die Aufnahme eines vorzugsweise viskosen oder pastösen Schmiermittels, vorzugsweise eines Schmierfettes, ausgebildet und geeignet sind. Das Vorsehen von Schmiermittel an den Durchbrechungen in unmittelbarer Nähe der Wälzkörper ist besonders vorteilhaft, da die Wälzkörper beim Abrollen während des Verfahrens der Schienenelemente mit dem Schmiermittel in Berührung kommen und dieses auf die Laufflächen der Schienenelemente verteilen, wodurch wiederum die Laufeigenschaften der Teleskopschiene oder der Linearführung verbessert werden.

### FIGUREN

Weitere Vorteile, Merkmale und Ausgestaltungen der vorliegenden Erfindung werden anhand der folgenden Beschreibung einer erfindungsgemäßen Ausführungsform und der dazugehörigen Figuren deutlich. In den Figuren sind gleiche Elemente mit gleichen Bezugszeichen bezeichnet.

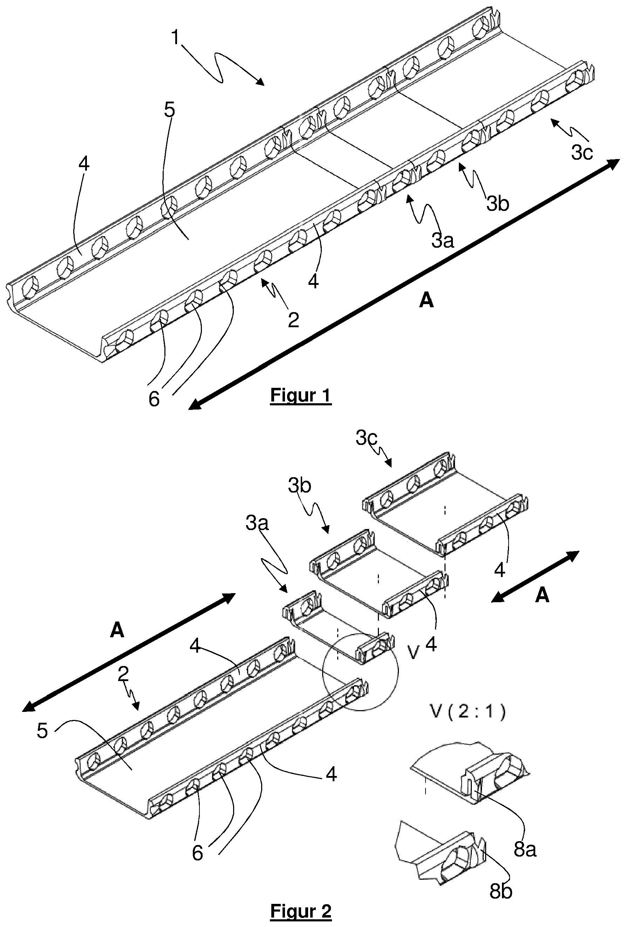

- Figur 1: zeigt eine perspektivische Ansicht einer Ausführungsform eines erfindungsgemäß als Kugelkäfig ausgebildeten Wälzkörperkäfigs mit vier in Reihe miteinander verbundenen Modulelementen, einem Basismodul und drei unterschiedlich langen Verlängerungsmodulen mit einer, zwei bzw. drei Durchbrechungen zum Aufnehmen von Wälzkörpern.
- Figur 2: zeigt eine perspektivische Ansicht der Ausführungsform des Wälzkörperkäfigs gemäß Figur 1 mit voneinander getrennten Modulelementen sowie eine vergrößerte Detailansicht (Kreisausschnitt "V") der Befestigungsmittel an den Endabschnitten der Aufnahmeschenkel zweier Modulelemente.

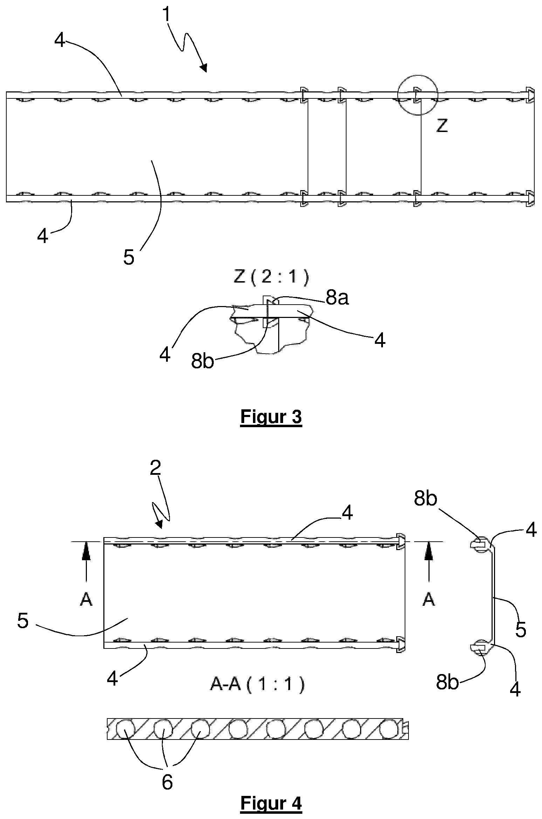

- Figur 3: zeigt den Wälzkörperkäfig gemäß Figur 1 mit verbundenen Modulelementen in einer Ansicht von oben sowie eine vergrößerte Detailansicht (Kreisausschnitt "Z") der miteinander verbundenen Befestigungsmittel an den Endabschnitten der Aufnahmeschenkel zweier Modulelemente.
- Figur 4: zeigt verschiedene Ansichten des Basismoduls des Wälzkörperkäfigs gemäß den Figuren 1 bis 3: eine Ansicht von oben, eine Ansicht mit Blickrichtung von der Seite auf das im Wesentlichen C-förmige Profil des Basismoduls sowie auf die an den Endabschnitten der Aufnahmeschenkel angeordneten Befestigungsmittel und eine Ansicht in Blickrichtung A-A von Innen auf einen der Aufnahmeschenkel.

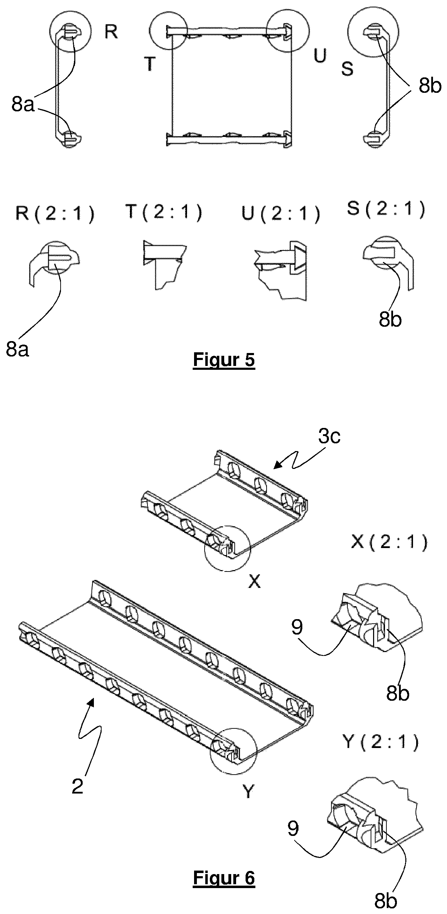

- Figur 5: zeigt verschiedene Ansichten eines Verlängerungsmoduls mit drei Durchbrechungen in jedem Aufnahmeschenkel des Wälzkörperkäfigs gemäß den Figu-ren 1 bis 3: eine Ansicht von oben sowie zwei Ansichten jeweils mit Blickrichtung von entgegengesetzten Seiten auf das im Wesentlichen C-förmige Profil des Verlängerungsmoduls sowie auf die an den Endabschnitten der Aufnahmeschenkel angeordneten Befestigungsmittel. Des Weiteren zeigt Figur 5 vergrößerte Detailansichten (Kreisausschnitte "S", "T", "U", "R") der Befestigungsmittel an den Endabschnitten der Aufnahmeschenkel des Verlängerungsmoduls.
- Figur 6: zeigt perspektivische Ansichten des Basismoduls sowie des Verlängerungsmoduls mit drei Durchbrechungen des Wälzkörperkäfigs gemäß den Figuren 1 bis 3 mit Blick auf die Enden der Modulelemente mit "ersten" Befestigungsmitteln bzw. Verbindungsstrukturen an den Endabschnitten der Aufnahmeschenkel sowie vergrößerte Detailansichten (Kreisausschnitte "X", "Y") der Befestigungsmittel.

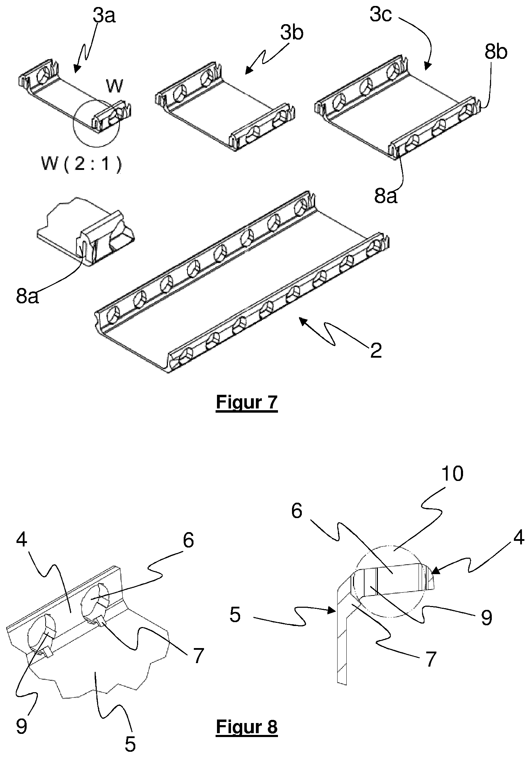

- Figur 7: zeigt perspektivische Ansichten des Basismoduls sowie der drei Verlängerungsmodule des Wälzkörperkäfigs gemäß den Figuren 1 bis 3 mit Blick auf die gegenüber der Darstellung in Figur 6 entgegengesetzten Enden der Modulelemente, wobei das Basismodul an diesem Ende keine Befestigungsmittel aufweist und die Verlängerungsmodule "zweite" Befestigungsmittel an den Endabschnitten der Aufnahmeschenkel aufweisen, sowie eine vergrößerte Detailansicht (Kreisausschnitt "W") der Befestigungsmittel an dem Verlängerungsmodul mit einer Durchbrechung.
- Figur 8: zeigt eine perspektivische abgebrochene Darstellung sowie eine Schnittdarstellung einer Durchbrechung zum Aufnehmen eines Wälzkörpers, hier einer Kugel, im Aufnahmeschenkel eines Modulelements einer alternativen Ausführungsform mit einem als Vorsprung ausgebildeten Durchtrittsbegrenzer.

Die Figuren 1 bis 7 zeigen verschiedene Ansichten und Elemente einer Ausführungsform eines erfindungsgemäß modular aufgebauten Wälzkörperkäfigs 1, welcher als Kugelkäfig ausgebildet ist und beispielhaft vier in Reihe miteinander verbundene bzw. verbindbare Modulelemente umfasst, nämlich ein Basismodul 2 und drei unterschiedlich lange Verlängerungsmodule 3a, 3b und 3c mit einer, zwei bzw. drei Durchbrechungen 6 an jedem Aufnahmeschenkel 4 zum Aufnehmen von Wälzkörpern, welche in diesem Ausführungsbeispiel Kugeln wären (in Figuren 1 bis 7 nicht dargestellt; in Figur 8 strichpunktiert dargestellt). In der vorliegenden Ausführungsform sind die Modulelemente aus Kunststoff im Spritzgussverfahren hergestellt.

Die Figuren 1 und 2 zeigen perspektivische Ansichten des Wälzkörperkäfigs 1, wobei in Figur 1 die Modulelemente in Reihe miteinander verbunden sind und Figur 2 die Modulelemente voneinander getrennt zeigt. Die Pfeile "A" in den Figuren 1 und 2 veranschaulichen die hierin beschriebene Längserstreckungsrichtung des Wälzkörperkäfigs bzw. der Modulelemente, welche auch der Verfahrrichtung der Schienenelemente einer mit dem Wälzkörperkäfig ausgerüsteten Teleskopschiene oder Linearführung entspricht.

Jedes der einzelnen Modulelemente weist zwei Aufnahmeschenkel 4 mit Durchbrechungen 6 zum Aufnehmen von Wälzkörpern und einen die beiden Aufnahmeschenkel 4 verbindenden Verbindungsabschnitt 5 auf. Der Verbindungsabschnitt 5 jedes Modulelements ist als ein flacher Streifen bzw. ein flaches Band ausgebildet, an dessen gegenüberliegenden seitlichen Kanten, welche parallel zur Längserstreckungsrichtung verlaufen, sich jeweils ein ebenfalls als Streifen oder Band ausgebildeter Aufnahmeschenkel 4 mit den Durchbrechungen 6 in einem Winkel von etwa 90° gegenüber dem Verbindungsabschnitt 5 abgewinkelt anschließt. In Blickrichtung der Längserstreckungsrichtung hat daher jedes Modulelement und somit auch der aus Modulelementen zusammengesetzte Wälzkörperkäfig 1 einen im Wesentlichen C-förmigen Querschnitt, wie beispielsweise in den Figuren 4 und 5 gezeigt ist.

In der in den Figuren 1 bis 7 gezeigten Ausführungsform eines erfindungsgemäßen Wälzkörperkäfigs 1 sind die Befestigungsmittel 8a und 8b zum Verbinden der Modulelemente an den Endabschnitten der Aufnahmeschenkel 4 der Modulelemente vorgesehen., wobei das Basismodul 2 in dieser Ausführungsform nur an einem Ende Befestigungsmittel für ein Verbinden mit einem weiteren Verlängerungsmodul aufweist.

In der gezeigten Ausführungsform sind die miteinander verbindbaren oder verbundenen Befestigungsmittel 8a und 8b als Nut- und Feder-Verbindungen ausgebildet, speziell als Schwalbenschanz-Feder 8a und Schwalbenschwanz-Nut oder Schwalbenschwanz-Fuge 8b, die form- und kraftschlüssig gegen eine Trennung der Modulelemente miteinander verbindbar sind. Die Schwalbenschwanz-Nut 8b ist im Wesentlichen als Negativ-Form und die Schwalbenschanz-Feder 8a als entsprechende Positiv-Form ausgebildet. Im Sinne der obigen Beschreibung kann die Schwalbenschanz-Feder 8a als ein "erstes" Befestigungsmittel und die Schwalbenschwanz-Nut 8b als ein "zweites" Befestigungsmittel beschrieben werden, welche im Wesentlichen komplementär zueinander ausgebildet und miteinander verbindbar sind.

Die Verlängerungsmodule 3a, 3b, 3c weisen auf beiden Seiten bzw. an beiden Enden jeweils zwei Befestigungsmittel an den Endabschnitten der Aufnahmeschenkel 4 auf, während in dieser Ausführungsform das Basismodul 2 die Befestigungsmittel nur auf einer Seite bzw. an einem Ende an den Endabschnitten der Aufnahmeschenkel 4 aufweist. Die vorliegende Ausführungsform weist die oben beschriebene "spiegelsymmetrische" Anordnung der ersten und zweiten Befestigungsmittel auf, wonach an beiden am gleichen Ende des jeweiligen Modulelements angeordneten Endabschnitten der Aufnahmeschenkel 4 die gleichen Befestigungsmittel vorgesehen sind, nämlich beispielsweise "erste" Befestigungsmittel, und an beiden am gegenüberliegenden Ende des jeweiligen Modulelements angeordneten Endabschnitten der Aufnahmeschenkel 4 entsprechend gleiche "zweite" Befestigungsmittel. Das Basismodul 2 weist in dieser Ausführungsform nur an einem Ende an den Endabschnitten der Aufnahmeschenkel 4 "zweite" Befestigungsmittel auf, nämlich Schwalbenschwanz-Nuten 8b.

Wie es beispielsweise in den Figuren 2, 3 und 5 erkennbar ist, werden für eine Verbindung zweier Modulelemente die an den Endabschnitten der beiden Aufnahmeschenkel 4 eines Modulelements angeordneten Schwalbenschanz-Federn 8a von oben, d. h. von der dem Verbindungsabschnitt 5 abgewandten Seite der Aufnahmeschenkel 4, in die Schwalbenschwanz-Nuten 8b an den Endabschnitten der Aufnahmeschenkel 4 eines weiteren Modulelements eingeführt.

Wie man es in den vergrößerten Detailansichten (Kreisausschnitte "X", "Y") der Figur 6 erkennt, wird die Schwalbenschwanz-Nut 8b ausgehend von der Einführöffnung von oben nach unten zum Boden hin breiter und weist einen Hinterschnitt auf für eine Verrastung der Schwalbenschanz-Feder 8a beim Einführen in die Schwalbenschwanz-Nut 8b. Damit die als entsprechende Positiv-Form zu der Schwalbenschwanz-Nut 8b ausgebildete Schwalbenschanz-Feder 8a in die vor dem Hinterschnitt schmalere Öffnung der Schwalbenschwanz-Nut 8b eingeführt werden kann, weist sie zwei durch einen Schlitz separierte Abschnitte auf, die beim Einführen in die Schwalbenschwanz-Nut 8b leicht zusammengedrückt werden, um das Einführen zu ermöglichen, und nach dem Einführen aufgrund der Elastizität des Kunststoffmaterials wieder in ihre Ausgangsstellung zurückkehren und sich an die als Hinterschnitt in der Schwalbenschwanz-Nut 8b ausgebildete Rastfläche anlegen.

Die Schwalbenschwanzform der Nut- und Feder-Verbindung verhindert durch den Formschluss ein unbeabsichtigtes Trennen der Modulelemente in Längserstreckungsrichtung des Wälzkörperkäfigs, und die Verrastung verhindert ein unbeabsichtigtes Ausheben der Schwalbenschanz-Feder 8a aus der Schwalbenschwanz-Nut 8b.

In der hier gezeigten Ausführungsform eines erfindungsgemäßen modularen Wälzkörperkäfigs 1 weist das Basismodul 2 an jedem Aufnahmeschenkel 4 acht in gleichem Abstand angeordnete Durchbrechungen 6 auf. Die Verlängerungsmodule 3a, 3b und 3c sind hierin beispielhaft mit einer, zwei bzw. drei Durchbrechungen dargestellt und in der wiedergegebenen Abfolge in Reihe mit dem Basismodul 2 verbunden. Alternativ kann beispielsweise auch das Verlängerungsmodul 3c mit drei Durchbrechungen als Basismodul eingesetzt und beliebig mit weiteren Verlängerungsmodulen gleicher oder unterschiedlicher Länge zu einem erfindungsgemäßen modularen Wälzkörperkäfig beliebiger Länge zusammengefügt werden.

Bei den Moduleinheiten der in den Figuren 1 bis 7 gezeigten Ausführungsform sind an den Durchbrechungen 6 in den Aufnahmeschenkeln 4 Durchtrittsbegrenzer für die Kugeln dadurch gebildet, dass sich der Durchmesser am inneren Umfangsrand der Durchbrechungen 6 in Richtung zum gegenüberliegenden Aufnahmeschenkel kegelförmig verjüngt, sodass die Kugeln zwar von außen in die Durchbrechungen eingesetzt werden, aber nicht hindurchtreten können und in der jeweiligen Durchbrechung gehalten werden, so dass sie jeweils etwa gleich weit zu beiden Seiten des Aufnahmeschenkels aus der Durchbrechung herausragen.

Figur 8 zeigt eine alternative Ausführungsform eines als Vorsprung ausgebildeten Durchtrittsbegrenzers 7 an Durchbrechungen 6 im Aufnahmeschenkel eines Modulelements. In der in Figur 8 rechts wiedergegebenen Schnittdarstellung durch die Durchbrechung 6 ist der Wälzkörper 10, hier eine Kugel, schematisch durch strichpunktierten Kreis dargestellt.

Wie man es in den vergrößerten Detailansichten (Kreisausschnitte "X", "Y") der Figur 6 sowie in Figur 8 erkennt, sind an den Durchbrechungen 6 Schmiermittelausnehmungen 9 am inneren Umfangsrand der Durchbrechungen für die Aufnahme eines Schmiermittels, vorzugsweise eines viskosen Schmierfettes vorgesehen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit es nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellungsbeschreibung lediglich beispielhaft und ist nicht als Beschränkung des Schutzbereichs gedacht, so wie er durch die Ansprüche definiert wird. Die Erfindung ist nicht auf die dargestellten Ausführungsformen beschränkt.

### BEZUGSZEICHENLISTE

- 1: Wälzkörperkäfig
- 2: Basismodul
- 3a, 3b, 3c: Verlängerungsmodule
- 4: Aufnahmeschenkel
- 5: Verbindungsabschnitt
- 6: Durchbrechungen
- 7: Durchtrittsbegrenzer
- 8a, 8b: Befestigungsmittel
- 9: Schmiermittelausnehmung
- 10: Wälzkörper

- A: Längserstreckungsrichtung des Wälzkörperkäfigs

## Patentansprüche

1. Wälzkörperkäfig (1) zum Positionieren einer Mehrzahl von Wälzkörpern zwischen zwei gegeneinander verfahrbar gelagerten Schienenelementen einer Teleskopschiene oder einer Linearführung,
wobei der Wälzkörperkäfig (1) aus zwei oder mehr Modulelementen (2, 3a, 3b, 3c) zusammengesetzt oder zusammensetzbar ist, welche ein Basismodul (2) und ein oder mehrere Verlängerungsmodule (3a, 3b, 3c) umfassen,
**dadurch gekennzeichnet, dass**
jedes Modulelement (2, 3a, 3b, 3c) genau zwei Aufnahmeschenkel (4) mit jeweils einer oder mehreren Durchbrechungen (6) zum Aufnehmen von Wälzkörpern und wenigstens einen die beiden Aufnahmeschenkel (4) verbindenden Verbindungsabschnitt (5) aufweist, wobei die Aufnahmeschenkel (4) in einem Winkel von etwa 80 bis 100° zu dem wenigstens einen Verbindungsabschnitt (5) unter Ausbildung eines im Wesentlichen C-förmigen Querschnitts abgewinkelt angeordnet sind,
wobei das Basismodul (2) und das eine oder die mehreren Verlängerungsmodule (3a, 3b, 3c) über Befestigungsmittel (8a, 8b) in Reihe in der Längserstreckungsrichtung (A) des Wälzkörperkäfigs (1) fest oder lösbar miteinander verbunden oder verbindbar sind.

2. Wälzkörperkäfig nach Anspruch 1, wobei die Modulelemente (2, 3a, 3b, 3c) in der Längserstreckungsrichtung (A) an den Endabschnitten ihrer Aufnahmeschenkel (4) und/oder an dem wenigstens einen Verbindungsabschnitt (5) Befestigungsmittel (8a, 8b) für ein formschlüssiges, kraftschlüssiges und/oder stoffschlüssiges Verbinden mit wenigstens einem weiteren Modulelement (2, 3a, 3b, 3c) aufweisen.

3. Wälzkörperkäfig nach einem der vorhergehenden Ansprüche, wobei die Befestigungsmittel (8a, 8b) an den Endabschnitten der Aufnahmeschenkel (4) der Modulelemente (2, 3a, 3b, 3c) angeordnet sind und erste und zweite Befestigungsmittel umfassen, wobei die ersten Befestigungsmittel für ein formschlüssiges, kraftschlüssiges und/oder stoffschlüssiges Verbinden mit den zweiten Befestigungsmitteln ausgebildet sind.

4. Wälzkörperkäfig nach einem der vorhergehenden Ansprüche, wobei die Verlängerungsmodule (3a, 3b, 3c) und optional auch das Basismodul an beiden Endabschnitten jedes ihrer wenigstens zwei Aufnahmeschenkel (4) Befestigungsmittel (8a, 8b) aufweisen, wobei an einem Endabschnitt eines Aufnahmeschenkels (4) erste Befestigungsmittel (8a) und am entgegengesetzten Endabschnitt des selben Aufnahmeschenkels (4) für ein formschlüssiges, kraftschlüssiges und/oder stoffschlüssiges Verbinden mit den ersten Befestigungsmitteln ausgebildete zweite Befestigungsmittel (8a) vorgesehen sind, wobei
a) an den Endabschnitten der Aufnahmeschenkel (4), welche in der Längserstreckungsrichtung (A) am gleichen Ende des Modulelements angeordnet sind, gleiche erste oder zweite Befestigungsmittel angeordnet sind, oder
b) an den Endabschnitten der Aufnahmeschenkel (4), welche in der Längserstreckungsrichtung (A) am gleichen Ende des Modulelements angeordnet sind, verschiedene erste oder zweite Befestigungsmittel angeordnet sind.

5. Wälzkörperkäfig nach einem der vorhergehenden Ansprüche, wobei die Befestigungsmittel (8a, 8b) an den Modulelementen (2, 3a, 3b, 3c) als Nut- und Feder-Verbindungen oder als Zapfen- und Zapfenloch-Verbindungen ausgebildet sind, vorzugsweise als eine Schwalbenschwanz-Nut- und -Feder-Verbindung.

6. Wälzkörperkäfig nach einem der vorhergehenden Ansprüche, wobei die Befestigungsmittel (8a, 8b) an den Modulelementen (2, 3a, 3b, 3c) wenigstens eine Rastausnehmung, einen Hinterschnitt, eine Rastnase oder eine Zahnung für einen verrastenden Eingriff aufweisen.

7. Wälzkörperkäfig nach einem der vorhergehenden Ansprüche, wobei die Modulelemente (2, 3a, 3b, 3c) des Wälzkörperkäfigs (1) jeweils einstückig und separat voneinander hergestellt sind, vorzugsweise aus thermoplastischem Polymer im Spritzgussverfahren jeweils einstückig und separat voneinander hergestellt sind, besonders bevorzugt aus Polyoxymethylen (POM) im Spritzgussverfahren jeweils einstückig und separat voneinander hergestellt sind.

8. Wälzkörperkäfig nach einem der vorhergehenden Ansprüche, wobei der Wälzkörperkäfig (1) ein Kugelkäfig ist und die Durchbrechungen (6) an den Aufnahmeschenkeln (4) jeweils zum Aufnehmen von einer oder mehreren Kugeln als Wälzkörper ausgebildet sind, vorzugsweise jeweils zum Aufnehmen von genau einer Kugel als Wälzkörper.

9. Wälzkörperkäfig nach einem der vorhergehenden Ansprüche, wobei an den Durchbrechungen (6) in den Aufnahmeschenkeln (4) zum Aufnehmen von Wälzkörpern Durchtrittsbegrenzer (7) gegen ein vollständiges Hindurchtreten der Wälzkörper durch die Durchbrechungen vorgesehen sind, wobei die Durchtrittsbegrenzer (7) vorzugsweise in der Form von an den Durchbrechungen (6) angeordneten und sich aus der Ebene des jeweiligen Aufnahmeschenkels heraus abgewinkelt erstreckenden Anlageflächen, Laschen oder Vorsprüngen ausgebildet sind oder wobei die Durchtrittsbegrenzer (7) vorzugsweise dadurch gebildet sind, dass sich der innere Umfangsrand der Durchbrechung (6) wenigstens abschnittsweise kegel- oder kalottenförmig verjüngt.

10. Wälzkörperkäfig nach einem der vorhergehenden Ansprüche, wobei die in den Aufnahmeschenkeln (4) des zusammengebauten Wälzkörperkäfigs (1) in der Längserstreckungsrichtung (A) verteilten Durchbrechungen (6) zum Aufnehmen von Wälzkörpern in gleichen Abständen zueinander angeordnet sind oder in Längserstreckungsrichtung (A) des zusammengebauten Wälzkörperkäfigs (1) vom Basismodul (2) zum letzten Verlängerungsmodul in zu- oder abnehmenden Abständen zueinander angeordnet sind oder in Längserstreckungsrichtung (A) des zusammengebauten Wälzkörperkäfigs (1) von dessen beiden Endabschnitten zu dessen Mitte hin in zunehmenden Abständen zueinander angeordnet sind.

11. Wälzkörperkäfig nach einem der vorhergehenden Ansprüche, wobei an oder in den Durchbrechungen (6) in den Aufnahmeschenkeln (4) zum Aufnehmen der Wälzkörper Ausnehmungen oder Taschen (9) vorgesehen sind, welche für die Aufnahme eines vorzugsweise viskosen oder pastösen Schmiermittels, vorzugsweise eines Schmierfettes, ausgebildet und geeignet sind.

12. Teleskopschiene oder Linearführung mit gegeneinander verfahrbar gelagerten Schienenelementen und wenigstens einem Wälzkörperkäfig nach einem der Ansprüche 1 bis 13 und mit in den Durchbrechungen des Wälzkörperkäfigs aufgenommenen Wälzkörpern.

## Claims

1. Rolling element cage (1) for positioning a plurality of rolling elements between two rail elements of a telescopic rail or a linear guide which are mounted so as to be movable relative to one another,
wherein
the rolling element cage (1) is composed of or can be composed of two or more module elements (2, 3a, 3b, 3c), which comprise a base module (2) and one or more extension modules (3a, 3b, 3c),
**characterized in that** each module element (2, 3a, 3b, 3c) has at least two receiving legs (4), each having one or more openings (6) for receiving rolling elements, and at least one connecting section (5) connecting the two receiving legs (4), wherein the receiving legs (4) are arranged angled at an angle of about 80 to 100° to the at least one connecting section (5), forming a substantially C-shaped cross section, wherein the base module (2) and the one or more extension modules (3a, 3b, 3c) are fixedly or detachably connected or connectable to one another in series in the longitudinal extension direction (A) of the rolling element cage (1) via fastening means (8a, 8b).

2. The rolling element cage according to claim 1, wherein the module elements (2, 3a, 3b, 3c) have fastening means (8a, 8b) in the longitudinal extension direction (A) at the end portions of their receiving legs (4) and/or at the at least one connecting portion (5) for a form-fitting, friction-fitting and/or substance-fitting connection to at least one further module element (2, 3a, 3b, 3c).

3. The rolling element cage according to one of the preceding claims, the fastening means (8a, 8b) being arranged on the end portions of the receiving legs (4) of the module elements (2, 3a, 3b, 3c) and comprising first and second fastening means, the first fastening means being designed for a form-fitting, friction-fitting and/or substance-fitting connection to the second fastening means.

4. The rolling element cage according to one of the preceding claims, wherein the extension modules (3a, 3b, 3c) and optionally also the base module have fastening means (8a, 8b) at both end portions of each of their at least two receiving legs (4), wherein first fastening means (8a) are provided at one end portion of a receiving leg (4) and second fastening means (8a) are provided at the opposite end portion of the same receiving leg (4), which second fastening means are configured for a form-fitting, friction-fitting and/or substance-fitting connection to the first fastening means, wherein
a) equal first or second fastening means are arranged at the end portions of the receiving legs (4) which are arranged at the same end of the module element in the longitudinal extension direction (A), or
b) different first or second fastening means are arranged at the end portions of the receiving legs (4) which are arranged at the same end of the module element in the longitudinal extension direction (A).

5. The rolling element cage according to one of the preceding claims, wherein the fastening means (8a, 8b) on the module elements (2, 3a, 3b, 3c) are formed as tongue-and-groove connections or as trunnion and mortise connections, preferably as a dovetail tongue-and-groove connection.

6. The rolling element cage according to one of the preceding claims, wherein the fastening means (8a, 8b) on the module elements (2, 3a, 3b, 3c) have at least one latching recess, an undercut, a latching nose or a toothing for a latching engagement.

7. The rolling element cage according to one of the preceding claims, wherein the module elements (2, 3a, 3b, 3c) of the rolling element cage (1) are each manufactured in one piece and separately from one another, preferably are each manufactured in one piece and separately from one another from thermoplastic polymer by injection molding, particularly preferably are each manufactured in one piece and separately from one another from polyoxymethylene (POM) by injection molding.

8. The rolling element cage according to one of the preceding claims, wherein the rolling element cage (1) is a ball cage and the openings (6) on the receiving legs (4) are each designed to receive one or more balls as rolling elements, preferably each to receive exactly one ball as rolling element.

9. The rolling element cage according to one of the preceding claims, wherein passage limiters (7) are provided at the openings (6) in the receiving legs (4) for receiving rolling elements to prevent the rolling elements from passing completely through the openings, wherein the passage limiters (7) are preferably in the form of contact surfaces, lugs or projections arranged on the openings (6) and extending at an angle out of the plane of the respective receiving leg, or wherein the passage limiters (7) are preferably formed in that the inner circumferential edge of the opening (6) tapers at least in sections in the shape of a cone or dome.

10. The rolling element cage according to one of the preceding claims, wherein the openings (6) distributed in the receiving legs (4) of the assembled rolling element cage (1) in the longitudinal extension direction (A) for receiving rolling elements are arranged at equal distances from one another or are arranged at increasing or decreasing distances from one another in the longitudinal extension direction (A) of the assembled rolling element cage (1) from the base module (2) to the last extension module or are arranged at increasing distances from one another in the longitudinal direction (A) of the assembled rolling element cage (1) from its two end sections to its center.

11. The rolling element cage according to one of the preceding claims, wherein cutouts or pockets (9) are provided at or in the openings (6) in the receiving legs (4) for receiving the rolling elements, which are designed and suitable for receiving a preferably viscous or pasty lubricant, preferably a lubricating grease.

12. A telescopic rail or linear guide with rail elements mounted so as to be movable relative to one another and at least one rolling element cage according to one of claims 1 to 13 and with rolling elements accommodated in the openings of the rolling element cage.

## Revendications

1. Cage à corps roulants (1) pour positionner une pluralité de corps roulants entre deux éléments de rail d'un rail télescopique ou d'un guidage linéaire, montés de façon à pouvoir être déplacés l'un par rapport à l'autre, la cage à corps roulants (1) étant assemblée, ou pouvant être assemblée, de deux ou de davantage d'éléments de module (2, 3a, 3b, 3c) qui comprennent un module de base (2) et un ou plusieurs modules d'extension (3a, 3b, 3c),
**caractérisée en ce que** chaque élément de module (2, 3a, 3b, 3c) comprend exactement deux bras de réception (4) avec, chacun, un ou plusieurs ouvertures (6) pour recevoir des corps roulants et au moins une partie de liaison (5) reliant les deux bras de réception (4), les bras de réception (4) étant disposés sous un angle d'environ 80 à 100 ° par rapport à ladite au moins une partie de liaison (5) tout en formant une section transversale essentiellement en forme d'un C,
le module de base (2) et ledit un ou les plusieurs modules d'extension (3a, 3b, 3c) étant reliés, ou pouvant être reliés, les uns aux autres, fermement ou de façon détachable, moyennant des moyens de fixation (8a, 8b), en ligne dans la direction de l'étendue longitudinale (A) de la cage à corps roulants (1).

2. Cage à corps roulants selon la revendication 1, les éléments de module (2, 3a, 3b, 3c) comprenant dans la direction de l'étendue longitudinale (A), aux parties d'extrémité de leurs bras de réception (4) et/ou à ladite au moins une partie de liaison (5), des moyens de fixation (8a, 8b) pour une liaison par la forme, par la force et/ou par la matière audit au moins un autre élément de module (2, 3a, 3b, 3c).

3. Cage à corps roulants selon l'une des revendications précédentes, les moyens de fixation (8a, 8b) étant disposés aux parties d'extrémité des bras de réception (4) des éléments de module (2, 3a, 3b, 3c) et comprenant des premiers et des deuxièmes moyens de fixation, les premiers moyens de fixation étant configurés pour une liaison par la forme, par la force et/ou par la matière aux deuxièmes moyens de fixation.

4. Cage à corps roulants selon l'une des revendications précédentes, les modules d'extension (3a, 3b, 3c) et, optionnellement aussi le module de base, comprenant aux deux parties d'extrémité de chacun de leurs au moins deux bras de réception (4) des moyens de fixation (8a, 8b), à une partie d'extrémité d'un bras de réception (4), des premiers moyens de fixation (8a), et à la partie d'extrémité opposée du même bras de réception (4), des deuxièmes moyens de fixation (8a) configurés pour une liaison aux premier moyens de fixation par la forme, par la force et/ou par la matière étant prévus,
(a) aux parties d'extrémité des bras de réception (4), qui sont disposés dans la direction de l'étendue longitudinale (A) à la même extrémité de l'élément de module, des mêmes premiers et deuxièmes moyens de fixation étant disposés, ou
(b) aux parties d'extrémité des bras de réception (4), qui sont disposés dans la direction de l'étendue longitudinale (A) à la même extrémité de l'élément de module, des premiers et deuxièmes moyens de fixation différents étant disposés.

5. Cage à corps roulants selon l'une des revendications précédentes, les moyens de fixation (8a, 8b) aux éléments de module (2, 3a, 3b, 3c) étant configurés comme des liaisons à rainure et languette ou comme des liaisons à tenon et mortaise, de préférence comme une liaison à rainure à queue d'aronde et languette.

6. Cage à corps roulants selon l'une des revendications précédentes, les moyens de fixation (8a, 8b) aux éléments de module (2, 3a, 3b, 3c) comprenant au moins un évidement à encliquetage, une contre-dépouille, un cran d'arrêt, ou une denture pour un engagement à encliquetage.

7. Cage à corps roulants selon l'une des revendications précédentes, les éléments de module (2, 3a, 3b, 3c) de la cage à corps roulants (1) étant fabriqués chacun en une seule pièce et indépendamment les uns des autres, de préférence en une seule pièce les uns des autres en un polymère thermoplastique par moulage par injection, de façon plus particulièrement préférée en une seule pièce et indépendamment les uns des autres en polyoxyméthylène (POM) par moulage par injection.

8. Cage à corps roulants selon l'une des revendications précédentes, la cage à corps roulants (1) étant une cage sphérique et les ouvertures (6) aux bras de réception (4) étant configurées chacune pour recevoir une ou plusieurs billes en tant que corps roulants, de préférence, chacune pour recevoir exactement une bille en tant que corps roulant.

9. Cage à corps roulants selon l'une des revendications précédentes, aux ouvertures (6) dans les bras de réception (4) pour recevoir des corps roulants, des limiteurs de passage (7), destinés à empêcher un passage complet des corps roulants par les ouvertures, étant prévus, les limiteurs de passage (7) étant configurés de préférence sous forme de surfaces d'appui, de languettes ou d'avances, disposées aux ouvertures (6) et s'étendant sous un angle à partir du plan du bras de réception respectif, et les limiteurs de passage (7) étant formés de préférence par le fait que le bord intérieur périphérique des ouvertures (6) se rétrécit au moins en partie de façon conique ou en forme de calotte.

10. Cage à corps roulants selon l'une des revendications précédentes, les ouvertures (6) pour recevoir des corps roulants, réparties dans les bras de réception (4) de la cage à corps roulants (1) assemblée dans la direction de l'étendue longitudinale (A), étant disposées à des distance égales les unes des autres ou étant disposées, dans la direction de l'étendue longitudinale (A) de la cage à corps roulants (1) assemblé, du module de base (2) au dernier module d'extension à des distances croissantes ou décroissantes les unes des autres ou étant disposées, dans la direction de l'étendue longitudinale (A) de la cage à corps roulants (1) assemblée, à partir de ses deux parties d'extrémité vers son centre, à des distances croissantes les unes des autres.

11. Cage à corps roulants selon l'une des revendications précédentes, sur les, ou dans les, ouvertures (6) dans les bras de réception (4) pour recevoir les corps roulants, des évidements ou poches (9) étant prévu(e)s qui sont formé(e)s et adapté(e)s pour recevoir un lubrifiant visqueux ou pâteux, de préférence une graisse.

12. Rail télescopique ou guidage linéaire avec des éléments de rail montés de façon à pouvoir être déplacés l'un par rapport à l'autre et avec une cage à corps roulants selon l'une des revendications 1 à 13 et avec des corps roulants reçus dans les ouvertures de la cage à corps roulants.
